# EUROPÄISCHE PATENTSCHRIFT

(11) **EP 3 326 739 B1**
(45) Veröffentlichungstag und Bekanntmachung des Hinweises auf die Patenterteilung: **21.04.2021**
(21) Anmeldenummer: 17203584.2
(22) Anmeldetag: 24.11.2017
(51) Int. Cl.: B29C 45/00, C22C 33/02, C22C 38/60, C22C 38/00, C22C 38/02, C22C 38/44, C22C 38/46, C22C 38/48, C22C 38/50, C22C 38/52, C22C 38/56, C22C 38/58, B29C 48/25, B29C 48/68, B22F 5/10

(54) **EISEN-KOHLENSTOFF-LEGIERUNG SOWIE VERFAHREN ZUR HERSTELLUNG UND VERWENDUNG DER LEGIERUNG**
IRON CARBON ALLOY AND METHODS FOR MAKING AND USING THE ALLOY
ALLIAGE FER-CARBONE ET PROCÉDÉ DE FABRICATION ET D'UTILISATION D'UN TEL ALLIAGE

(30) Priorität: 24.11.2016 DE 102016122673
(43) Veröffentlichungstag der Anmeldung: 30.05.2018
(73) Patentinhaber: Saar-Pulvermetall GmbH, 66793 Saarwellingen (DE)
(72) Erfinder: HAMENTGEN, Michael, 66787 Wadgassen (DE)
(74) Vertreter: Patentanwälte Bernhardt / Wolff Partnerschaft mbB

(56) Entgegenhaltungen:
- EP-A1- 2 662 462
- WO-A1-2010/044740
- CN-A- 101 985 720
- JP-A- H06 346 110
- US-A1- 2014 286 819
- SAMPATHKUMARAN P ET AL: "The effects of manganese content and mould size on abrasion and slurry erosion behaviour of chromium-manganese iron systems investigated by positron lifetime spectroscopy", WEAR, ELSEVIER SEQUOIA, LAUSANNE, CH, Bd. 267, Nr. 9-10, 9. September 2009 (2009-09-09), Seiten 1558-1565, XP026470994, ISSN: 0043-1648, DOI: 10.1016/J.WEAR.2009.06.001 [gefunden am 2009-06-11]
- MA QIAN ET AL: "Impact-abrasion behavior of low alloy white cast irons", WEAR, Bd. 209, Nr. 1-2, 1. August 1997 (1997-08-01), Seiten 308-315, XP055459974, CH ISSN: 0043-1648, DOI: 10.1016/S0043-1648(96)07345-0

## Beschreibung

Die Erfindung betrifft eine Eisen-Kohlenstoff-Legierung.

Eine Eisen-Kohlenstoff-Legierung, die 0,15 - 4 Gew.-% Kohlenstoff, 0,1 - 3 Gew.-% Mangan, 4-12 Gew.-% Chrom, 6-12 Gew.-% Vanadium. 0,01 - 5 Gew.-% Mo und 0 - 2,5 Gew.-% Wolfram enthält und verschleißbeständig sein soll, ist aus der WO/20100044740 bekannt.

Die JP H06 346110 A beschreibt eine Ventilführung eines internen Verbrennungsmotors, die aus einer gesinterten Eisen-Kohlenstofflegierung gebildet ist, die 2,1 Gew.-% Kohlenstoff, 3,9 Gew.-% Mangan, 1,9 Gew.-% Chrom und 0,96 Gew.-% Schwefel enthält.

Eine weitere Eisen-Kohlenstoff-Legierung ist aus der DE 10 2005 202 081 A1 bekannt, in der eine pulvermetallurgisch hergestellte, verschleißbeständige Legierung auf Eisenbasis beschrieben ist, deren Matrix auch bei langsamer Abkühlung in harten, verschleißbeständigen Martensit überführt werden kann.

Eine weitere verschleißbeständige Eisen-Kohlenstoff-Legierung, die einen hohen Widerstand gegen Abtrag bei Abrasionsbeanspruchung und hohe Korrosionsbeanspruchung aufweist, ist in der EP 2 374 560 A1 beschrieben.

Weitere Eisen-Kohlenstoff-Legierungen gehen aus CN 101 985 720 A, US 2014/286 819 A1, EP 2 662 462 A1, EP 2 253 398 A1, US 7288157 B2 und WO 2006/117186 A2 hervor.

Der Erfindung liegt die Aufgabe zugrunde, eine verschleißbeständige Eisen-Kohlenstoff-Legierung der eingangs genannten Art zu schaffen, die sich im Vergleich zu den bekannten verschleißbeständigen Eisen-Kohlenstoff-Legierungen einfacher mittels zerspanender Fertigungsverfahren bearbeiten lässt.

Erfindungsgemäß wird diese Aufgabe gelöst durch eine Eisen-Kohlenstoff-Legierung gemäß Anspruch 1.

Es hat sich gezeigt, dass mit der erfindungsgemäßen Eisen-Kohlenstoff-Legierung Werkstücke hergestellt werden können, die eine große Beständigkeit gegen Verschleiß aufweisen, aber dennoch gut zerspanbar sind. Es wird ein Stahl zur Verfügung gestellt, der auch für Anwendungen infrage kommt, für die solche Stähle bisher wegen der hohen Kosten für die Bearbeitung, die oftmals durch Elektroerosion erfolgen musste, nicht verwendet worden sind.
Die Elemente Mangan, Schwefel und Phosphor galten nach bisherigen metallurgischen Erkenntnissen bei Überschreiten gewisser, recht geringer Grenzanteile, die bei der erfindungsgemäßen Legierung überschritten werden, zwar insbesondere wegen einer reduzierenden Wirkung auf Festigkeit und Zähigkeit als schädlich. Überraschend hat sich nun aber gezeigt, dass die durch diese Elemente verursachten Nachteile bei der erfindungsgemäßen Legierung vernachlässigbar gering sind.

Die erfindungsgemäße Legierung hat sich als besonders geeignet zur Herstellung von Bauteilen von Kunststoffverarbeitungsmaschinen, insbesondere Extrudern oder Formen für die Kunststoffverarbeitung, z.B. für Spritzguss- oder Druckgussformen, erwiesen, da diese Bauteile einerseits besonders beständig gegen Verschleiß, insbesondere durch Abrasion, Erosion sowie Adhäsion, und Korrosion, sein müssen und andererseits bei der Herstellung der Bauteile eine zerspanende Bearbeitung notwendig ist. Zur Herstellung solcher Bauteile eignen sich die unten beschriebenen Herstellungsverfahren.

In der bevorzugten Ausführungsform der Erfindung bilden das Eisen und die in der genannten Zusammensetzung vorliegenden herstellungsbedingten Verunreinigungen den Rest der in der Zusammensetzung verbleibenden Anteile. Zweckmäßigerweise enthält die erfindungsgemäße Eisen-Kohlenstoff-Legierung Eisen mit 40 bis 70 Gew. %.
Die Verunreinigungen liegen jeweilig in einem Anteil < 0,1 Gew. % vor. Die Verunreinigungen können z.B. durch Aluminium, Brom, Blei, Sauerstoff, Zink, Bor, Antimon, Arsen und/oder Zinn oder durch andere Elemente gebildet sein.

Das Vanadium bildet in der Legierung mit Härten sehr harte Karbide im Bereich von 2800 HV. Bei der Abkühlung entstehen Primärkarbide und beim Auslagern feine Sekundärkarbide. Damit wird ein großer Widerstand gegen abrasiven Verschleiß aufgebaut. In einer Ausführungsform der Erfindung enthält die Legierung 5-12 Gew. % Vanadium.

Molybdän bildet ebenfalls Karbide und verbessert insbesondere die Einhärtetiefe. Dies ist insbesondere von Bedeutung, wenn die erfindungsgemäße Legierung zur Verwendung für dickwandige Teile vorgesehen ist.

Wolfram dient zum einen der Karbidbildung und zum anderen zur Verbesserung der Warmfestigkeit.

In einer Ausgestaltung der Erfindung wird die Legierung schmelzmetallurgisch erzeugt und in Pulverform gebracht.
Zur Pulverherstellung wird die Legierung in einer Ausführungsform der Erfindung in einem Gießstrahl, der vorzugsweise einen Durchmesser < 1,5 mm aufweist, mit einem Gasdruck, der größer als 1 bar Überdruck ist, mittels einer Düse versprüht ("Verdüsung"). Die dadurch erzeugten Tropfen, die eine Größe von < 1,5 mm aufweisen, nehmen eine kugelige Form an und erstarren innerhalb weniger Sekunden zu Pulverpartikeln. Die Pulverpartikel werden nach ihrer Verdüsung zweckmäßigerweise in einem kontinuierlich bewegten, vorzugsweise rotierenden, Gefäß aufgefangen und bis zur vollständigen Abkühlung in Bewegung gehalten, um zu verhindern, dass sie sich miteinander verbinden. Das verdüste Pulver wird anschließend gesiebt, um es nach Korngrößen zu trennen, und Pulverpartikel, die eine nicht kugelige Form aufweisen, entfernt.

Die Verdüsung und die Abkühlung wird vorzugsweise unter Schutzgasatmosphäre oder Unterdruck durchgeführt, um eine Oxidation der Pulverkörner zu vermeiden. Zur Verdüsung wird zweckmäßigerweise Stickstoff oder ein anderes inertes Gas verwendet. Da die Schmelze sehr rasch erstarrt und die Wärmeabfuhr beim Übergang von flüssig zu fest sehr groß ist, wird eine Seigerung in den Pulverpartikeln vermieden. Wenn die Legierung, wie unten näher erläutert, karbidbildende Elemente enthält, erfolgt die Erstarrung mit einem hohen Karbidanteil. Der Kohlenstoff wird an die karbidbildenden Elemente Niob, Vanadium, Molybdän, Wolfram, Chrom und Eisen gebunden und erstarrt weiß (metastabil).

Ferner wäre vorstellbar, die Legierung durch Mischen der einzelnen Legierungselemente herzustellen. Allerdings müsste dazu Pulver mit Partikelgrößen < 10 µm verwendet werden, um eine ausreichend gleichmäßige Diffusion erzielen zu können. Insbesondere die Herstellung von Werkstücken mit größeren Abmessungen ließe sich allerdings nur mit einer Verarbeitung des Pulvers zu einem gut fließenden Granulat durchführen.

Erfindungsgemäß wird die Legierung mit dem Ziel, einen hohen Anteil an spanbrechenden Mangansulfid zu erreichen und damit die Bearbeitbarkeit wesentlich zu verbessern, mit einem verhältnismäßig großen Anteil an Mangan und Schwefel dotiert.
Da sich das Mangan in der Schmelze, insbesondere wenn die Legierung zur Herstellung von Pulver schmelzmetallurgisch durch eine Düse versprüht wird und während der Verdüsung kugelig ausbildet, verteilt es sich gleichmäßig im Gefüge und hat eine spanbrechende Wirkung bei der Bearbeitung. Es hat sich überraschend gezeigt, dass der Schwefel die Festigkeit und Zähigkeit bei der vorliegenden Legierung nur derart geringfügig beeinflusst, dass die Verwendbarkeit der Legierung, insbesondere für die obengenannten Anwendungen, nicht einschränkt wird.
Die Vorteile für die zerspanende Bearbeitung zeigen sich insbesondere, wenn die Legierung mindestens 0,7 Gew. % Schwefel enthält, wobei der Anteil an Mangan zur Bildung von Mangansulfid vorzugsweise an den Schwefelanteil angepasst wird. Die verbesserte Zerspanbarkeit erweist sich als besonders vorteilhaft, wenn die Legierung, wie unten näher erläutert, karbidhaltig ist.

In einer Ausführungsform der Erfindung weist die Legierung höchstens 2,7 Gew. % Mangan auf. Es hat sich gezeigt, dass Mangangehalte im Bereich von 2,1 - 2,7 Gew. % für die meisten Anwendungen schon eine ausreichend große spanbrechende Wirkung erreicht wird und diesem Anteilsbereich die Festigkeit und Zähigkeit der Legierung nur besonders geringfügig ungünstig beeinflusst wird.

In einer besonders bevorzugten Ausgestaltung der Erfindung ist der Anteil von Mangan in der Legierung bezogen auf die Masse zumindest 4,5 mal so groß wie der Anteil von Schwefel. Vorteilhaft wird bei dem erfindungsgemäßen Verhältnis sichergestellt, dass der Schwefel als Mangansulfide abgebunden wird, Mangan im Überschuss bildet und sich kein Schwefeleisensulfid bildet, das sich negativ auf die mechanischen Eigenschaften der Legierung auswirken kann.

Der Phosphor, der in der Legierung vorzugsweise in einem Anteil von mindestens 0,03 Gew. %, besonders bevorzugt von mindestens 0,05 Gew. %, vorliegt, bildet mit dem Eisen und dem Kohlenstoff ein niedrigschmelzendes ternäres Phosphideutektikum und macht in der erfindungsgemäßen Legierung die Schmelze derart dünnflüssig, dass sie sich gut verdüsen lässt. Darüber hinaus wird durch den verhältnismäßig großen Phosphorgehalt der Reibfaktor des aus der Legierung zu fertigenden Werkstücks vermindert und dadurch dessen Verschleiß reduziert.
Liegt der Phosphor, wie nach einer besonders bevorzugten Ausführungsform der Erfindung vorgesehen, mit einem Anteil von mindestens 0,5 Gew. %, bevorzugt von mindestens 1,2 Gew. %, vor, lässt sich der Reibfaktor so weit reduzieren, dass für einige Anwendungen keine Schmierung mehr benötigt wird. Beispiele dafür sind Anwendungen, bei denen ein aus der Legierung gebildetes Werkstück unter Kontakt mit einem anderen Werkstück relativ zu dem anderen Werkstück bewegt wird. Das andere Werkstück kann ebenfalls aus der erfindungsgemäßen Legierung oder aus einem anderen metallischen Werkstoff, insbesondere Stahl, gebildet sein. Zweckmäßigerweise beträgt der maximale Anteil, in dem der Phosphor vorliegt, höchstens 1,8 Gew. %, vorzugsweise höchstens 1,6 Gew. %, weil sich höhere Gehalte insbesondere negativ auf die Härte der Legierung auswirken können.

Die Legierung enthält zweckmäßigerweise 9 - 30 Gew. % Chrom. Das Chrom wird zugegeben, um den Überschuss an Kohlenstoff abzubinden und Chromkarbide zu erzeugen. Jedenfalls unter der Voraussetzung, dass der Chromgehalt im Austenit mindestens 13 Gew. % beträgt, ist auch die Korrosionsbeständigkeit der Legierung sichergestellt.

Zweckmäßigerweise enthält die Legierung 0,5 - 6 Gew. % Kobalt. Kobalt verfeinert die Ausscheidungen beim Härten, bildet durch Substitution in Eisen Mischkristalle, verfestigt die Matrix und erhöht dadurch die Warmfestigkeit.

In einer Ausgestaltung der Erfindung enthält die Eisen-Kohlenstoff-Legierung Zirkon in einem Anteil von 0-0,1 Gew. %, vorzugsweise 0,01 - 0,1 Gew. %, und/oder Kupfer in einem Anteil von 0 - 1,8 Gew. %, vorzugsweise 0,01 - 0,1 Gew. %. Der Anteil an Zirkon ist begrenzt, da das Zirkon den Schwefel schon ab einer Konzentration von 0,15 Gew. % abbindet, sich als Zirkonsulfid in der Schlacke ablagert und damit genau die gegenteilige Wirkung erzielen würde, die durch das Mangan und den Schwefel erreicht werden soll.

Das Silizium, das vorzugsweise mit 0,4 - 2,0 Gew. % in der Legierung vorliegt, ist vorgesehen, um eine feine Verteilung der Karbide zu erreichen und damit die Bruchzähigkeit zu erhöhen. Zusätzlich wird die Anlassbeständigkeit und damit auch die Festigkeit gesteigert, der Sättigungsgrad vergrößert und die Schmelztemperatur verringert.

Titan wird in verhältnismäßig geringen Mengen, vorzugsweise mit 0,05 - 5,0 Gew. %, vorgesehen, damit in der Schmelze feinstverteilte Titankarbonitride gebildet werden. Diese tragen zur Keimbildung von kugeligen Sulfiden bei, die wie oben erläutert wichtig für die Zerspanbarkeit sind. Das Titan vergrößert darüber hinaus die Zähigkeit insbesondere bei einem hohen Anteil von Mangansulfid.

Niob oder/und Tantal bilden, wie auch das Vanadium, sehr harte Karbide im Bereich von 2800 HV. Der Vorteil von Niob im Vergleich zu Vanadium liegt insbesondere in der Korrosionsbeständigkeit, da Niob in der Matrix kaum Chrom löst und das Chrom dementsprechend der Matrix als Korrosionshemmer zur Verfügung steht. Folglich kann mit der Beigabe von Niob anstelle des Vanadiums die Korrosionsbeständigkeit verbessert werden. Der Anteil von Niob oder/und Tantal beträgt in der erfindungsgemäßen Legierung zweckmäßigerweise 1,5 - 15,0 Gew. %.

Nickel, das in der Legierung bevorzugt mit 1,0 - 8,0 Gew. % vorgesehen ist, unterstützt bei hohen Chromgehalten die Stabilität von Austenit. Zusätzlich wird die Durchhärtung gefördert.

Der Stickstoff wird bei der Verdüsung in der Schmelze aufgenommen und verbessert ebenfalls die Korrosionsbeständigkeit. Die sich ausbildenden Nitride üben bei einem geringen Stickstoffgehalt keine nachteiligen Wirkungen aus. Die Legierung enthält zweckmäßigerweise 0,11 - 0,3 Gew. % Stickstoff.

Das Verhältnis Kohlenstoff zu den karbidbildenden Elementen wird in einer Ausführungsform der Erfindung in der Legierung derart vorgesehen, dass genügend Kohlenstoff vorhanden ist, um die Karbide abzubinden, aber im Austenit noch 13 Gew. % Chrom verbleibt. Allerdings kann die Legierung, insbesondere wenn die Korrosionsbeständigkeit für die jeweilige Anwendung keine besondere Bedeutung hat, vorgesehen werden derart, dass der Restgehalt an Chrom geringer als 13 Gew. % ist.
Zweckmäßigerweise liegt der Kohlenstoff in der erfindungsgemäßen Legierung in einem ausreichend großen Anteil vor, um Verbindungen mit den karbidbildenden Elementen einzugehen. Bei der Erstarrung der Schmelze bilden sich in der Reihenfolge wie nachfolgend genannt Nb₂C und Nb₆C₅, VC und V₆C₅, MoC und Mo₂C, W2C, Cr3C2 und Cr₂₃C₆, Fe₃C. Danach muss genügend Kohlenstoff vorhanden sein, um bei der vorgesehenen und unten näher erläuterten Wärmebehandlung die gewünschte Härte durch die Umwandlung von Austenit in Martensit zu erreichen.
Angestrebt wird eine nahe dem eutektischen Punkt liegende Legierung mit einem Sättigungsgrad (S_{c} = %C / (4,3 - 1/3 (%Si +%P))) von etwa 1, wobei S_{c} zweckmäßigerweise von 0,4 bis 1,5 vorzugsweise von 0,5 bis 1,3 beträgt. Damit wird bei der Legierung die kleinstmögliche Schmelztemperatur erreicht und damit die Verdüsung erleichtert. Der verhältnismäßig große Anteil von Phosphor und Silizium unterstützt dabei, den Sättigungsgrad nahe 1 zu halten. Durch die schnelle Abkühlung der einzelnen Schmelztropfen bei der Verdüsung wird ein homogenes, gleichmäßiges und seigerungsfreies Gefüge im erstarrten Pulverpartikel erhalten. Die Erstarrung erfolgt durch die schnelle Abkühlung metastabil, d.h. es ist trotz des hohen Kohlenstoffgehalts kein freier Kohlenstoff vorhanden, da er mit den karbidbildenden Elementen zu Karbiden abgebunden wird.
Vorteilhaft wird mit der Erfindung ein hochlegierter, karbidhaltiger Stahl mit großer Verschleißbeständigkeit zu Verfügung gestellt, der aufgrund seiner guten Zerspanbarkeit und damit vergleichsweise kostengünstigeren Bearbeitbarkeit für Anwendungen infrage kommt, für die Stähle, die ähnliche mechanische Eigenschaften aufweisen, bisher aus Kostengründen nicht benutzt worden sind.

Die nachfolgend genannten Zusammensetzungen erfindungsgemäßer Eisen-Kohlenstoff-Legierungen A bis F, die als besonders vorteilhaft angesehen werden, unterscheiden sich im Wesentlichen durch die Anteile an Chrom zur Einstellung der Korrosionsbeständigkeit, an den genannten karbidbildenden Elementen zur Einstellung der Verschleißbeständigkeit, an Phosphor zur Einstellung des Reibwerts und an Schwefel zu Einstellung der Zerspanbarkeit.

### Eisen-Kohlenstoff-Legierung A (nicht beansprucht):

| | |
|---|---|
| Kohlenstoff: | 2,5 - 2,7 Gew. %, |
| Silizium: | 0,4 - 0,7 Gew. %, |
| Mangan: | 2,1 - 2,5 Gew. %, |
| Chrom: | 16,5-17,5 Gew. %, |
| Wolfram: | 1,6 - 2,2 Gew. %, |
| Molybdän: | 3,0 - 4,0 Gew. %, |
| Kobalt: | 3,0 - 4,0 Gew. %, |
| Titan | 0,05 -0,1 Gew. %, |
| Vanadium: | 8,0-9,0 Gew. %, |
| Zirkon: | 0 - 0,1 Gew. %, |
| Niob oder/und Tantal: | 6,2 - 6,6 Gew. %, |
| Kupfer: | 0 - 1,8 Gew. %, |
| Nickel: | 1,2 - 1,8 Gew. %, |
| Phosphor: | 0,01 - 1,5 Gew. %, |
| Schwefel: | 0,01 - 0,06 % Gew. %, |
| Stickstoff: | 0,11 - 0,3 Gew. % |
| sowie | |
| Eisen und Verunreinigungen | restlicher Anteil. |

### Eisen-Kohlenstoff-Legierung B (nicht beansprucht):

| | |
|---|---|
| Kohlenstoff: | 2,5 - 2,7 Gew. %, |
| Silizium: | 0,4 - 0,7 Gew. %, |
| Mangan: | 2,1 - 2,5 Gew. %, |
| Chrom: | 16,1 - 17,1 Gew. %, |
| Wolfram: | 1,6 - 2,2 Gew. %, |
| Molybdän: | 2,2 - 2,6 Gew. %, |
| Kobalt: | 2,2 - 2,8 Gew. %, |
| Titan: | 0,05 - 0,1 Gew. %, |
| Vanadium: | 8,0 - 9,0 Gew. %, |
| Zirkon: | 0 - 0,1 Gew. %, |
| Niob oder/und Tantal: | 6,2 - 6,6 Gew. %, |
| Kupfer: | 0 - 1,8 Gew. %, |
| Nickel: | 1,2 - 1,8 Gew. %, |
| Phosphor: | 0,01 - 1,5 Gew. %, |
| Schwefel: | 0,06 - 0,11 % Gew. %, |
| Stickstoff: | 0,11 - 0,3 Gew. % |
| sowie | |
| Eisen und Verunreinigungen | restlicher Anteil. |

### Eisen-Kohlenstoff-Legierung C (nicht beansprucht):

| | |
|---|---|
| Kohlenstoff: | 2,7 - 2,9 Gew. %, |
| Silizium: | 0,4 - 0,7 Gew. %, |
| Mangan: | 2,1 - 2,5 Gew. %, |
| Chrom: | 20,0 - 21,0 Gew. %, |
| Wolfram: | 3,4 - 4,0 Gew. %, |
| Molybdän: | 5,2 - 6,0 Gew. %, |
| Kobalt: | 2,8 - 3,4 Gew. %, |
| Titan: | 0,05 - 0,1 Gew. %, |
| Vanadium: | 8,0 - 9,0 Gew. %, |
| Zirkon: | 0-0,1 Gew. %, |
| Niob oder/und Tantal: | 3,0 - 4,0 Gew. %, |
| Kupfer: | 0 - 0,2 Gew. %, |
| Nickel: | 1,2 - 1,8 Gew. %, |
| Phosphor: | 0,01 - 1,5 Gew. %, |
| Schwefel: | 0,11 - 0,16 % Gew. %, |
| Stickstoff: | 0,11 - 0,3 Gew. % |
| sowie | |
| Eisen und Verunreinigungen | restlicher Anteil. |

### Eisen-Kohlenstoff-Legierung D (nicht beansprucht):

| | |
|---|---|
| Kohlenstoff: | 2,5 - 2,7 Gew. %, |
| Silizium: | 0,4 - 0,7 Gew. %, |
| Mangan: | 2,1 - 2,5 Gew. %, |
| Chrom: | 9,5 - 10,5 Gew. %, |
| Wolfram: | 3,0 - 4,0 Gew. %, |
| Molybdän: | 5,1 - 6,8 Gew. %, |
| Kobalt: | 5,0 - 6,0 Gew. %, |
| Titan: | 0,05 - 0,1 Gew. %, |
| Vanadium: | 8,0 - 9,0 Gew. %, |
| Zirkon: | 0-0,1 Gew. %, |
| Niob oder/und Tantal: | 1,5 - 2,0 Gew. %, |
| Kupfer: | 0 - 0,2 Gew. %, |
| Nickel: | 1,0 - 1,8 Gew. %, |
| Phosphor: | 0,01 - 0,03 Gew. %, |
| Schwefel: | 0,16 - 0,21 % Gew. %, |
| Stickstoff: | 0,11 - 0,3 Gew. % |
| sowie | |
| Eisen und Verunreinigungen | restlicher Anteil. |

### Eisen-Kohlenstoff-Legierung E (nicht beansprucht):

| | |
|---|---|
| Kohlenstoff: | 2,5 - 2,7 Gew. %, |
| Silizium: | 0,4 - 0,7 Gew. %, |
| Mangan: | 2,1 - 2,5 Gew. %, |
| Chrom: | 14,0 - 15,0 Gew. %, |
| Wolfram: | 3,0 - 4,0 Gew. %, |
| Molybdän: | 3,5 - 4,5 Gew. %, |
| Kobalt: | 5,2 - 6,0 Gew. %, |
| Titan: | 0,05 - 0,2 Gew. %, |
| Vanadium: | 8,0 - 9,0 Gew. %, |
| Zirkon: | 0 - 0,1 Gew. %, |
| Niob oder/und Tantal: | 1,5 - 2,0 Gew. %, |
| Kupfer: | 0 - 0,2 Gew. %, |
| Nickel: | 1,0 - 1,8 Gew. %, |
| Phosphor: | 0,01 - 1,5 Gew. %, |
| Schwefel: | 0,21 - 0,26 % Gew. %, |
| Stickstoff: | 0,11 - 0,3 Gew. % |
| sowie | |
| Eisen und Verunreinigungen | restlicher Anteil. |

### Eisen-Kohlenstoff-Legierung F:

| | |
|---|---|
| Kohlenstoff: | 2,3 - 2,5 Gew. %, |
| Silizium: | 0,4 - 0,7 Gew. %, |
| Mangan: | 2,1 - 2,7 Gew. %, |
| Chrom: | 14,0 - 15,0 Gew. %, |
| Wolfram: | 0,0 - 1,0 Gew. %, |
| Molybdän: | 2,0 - 3,0 Gew. %, |
| Kobalt: | 0,9 - 1,5 Gew. %, |
| Titan: | 0,05 - 0,3 Gew. %, |
| Vanadium: | 5,0 - 8,0 Gew. %, |
| Zirkon: | 0 - 0,1 Gew. %, |
| Niob oder/und Tantal: | 9,6 - 11,0 Gew. %, |
| Kupfer: | 0 - 0,2 Gew. %, |
| Nickel: | 1,0 - 1,8 Gew. %, |
| Phosphor: | 0,01 - 1,5 Gew. %, |
| Schwefel: | 0,26 - 0,31 % Gew. %, |
| Stickstoff: | 0,11 - 0,3 Gew. % |
| sowie | |
| Eisen und Verunreinigungen | restlicher Anteil. |

Nachfolgend sind weitere Zusammensetzungen von erfindungsgemäßen Eisen-Kohlenstoff-Legierungen genannt, die sich als vorteilhaft erwiesen haben.

### Eisen-Kohlenstoff-Legierung G:

| | |
|---|---|
| Kohlenstoff: | 2,5 - 2,8 Gew. %, |
| Silizium: | 0,4 - 0,7 Gew. %, |
| Mangan: | 2,1 - 2,7 Gew. %, |
| Chrom: | 13,5 - 14,5 Gew. %, |
| Wolfram: | 0,7 - 1,3 Gew. %, |
| Molybdän: | 3,0 - 4,0 Gew. %, |
| Kobalt: | 0,5 - 1,5 Gew. %, |
| Titan: | 0,05 - 0,4 Gew. %, |
| Vanadium: | 8,0 - 9,0 Gew. %, |
| Zirkon: | 0 - 0,1 Gew. %, |
| Niob oder/und Tantal: | 1,5 - 2 Gew. %, |
| Kupfer: | 0 - 0,2 Gew. %, |
| Nickel: | 1,2 - 1,8 Gew. %, |
| Phosphor: | 0,01 - 1,5 Gew. %, |
| Schwefel: | 0,31 - 0,36 % Gew. %, |
| Stickstoff: | 0,11 - 0,3 Gew. % |
| sowie | |
| Eisen und Verunreinigungen | restlicher Anteil. |

Bei der Eisen-Kohlenstoff-Legierung G wirkt Molybdän aufgrund des Kohlenstoffgehalts zwischen 2,5 - 2,8 Gew. % nicht als Karbidbildner, sondern in Kombination mit dem Chrom verstärkt gegen Korrosion, insbesondere Lochfraskorrosion.

### Eisen-Kohlenstoff-Legierung H:

| | |
|---|---|
| Kohlenstoff: | 2,6 - 3,0 Gew. %, |
| Silizium: | 0,4 - 1,0 Gew. %, |
| Mangan: | 2,1 - 2,7 Gew. %, |
| Chrom: | 15,2 - 16,2 Gew. %, |
| Wolfram: | 0,7 - 1,3 Gew. %, |
| Molybdän: | 2,0 - 5,0 Gew. %, |
| Kobalt: | 2,2 - 2,8 Gew. %, |
| Titan: | 0,05 - 0,5 Gew. %, |
| Vanadium: | 8,7 - 10,0 Gew. %, |
| Zirkon: | 0 - 0,1 Gew. %, |
| Niob oder/und Tantal: | 2,7 - 3,3 Gew. %, |
| Kupfer: | 0 - 0,2 Gew. %, |
| Nickel: | 1,0 - 1,8 Gew. %, |
| Phosphor: | 0,01 - 0,05 Gew. %, |
| Schwefel: | 0,36 - 0,50 % Gew. %, |
| Stickstoff: | 0,11 - 0,3 Gew. % |
| sowie | |
| Eisen und Verunreinigungen | restlicher Anteil. |

### Eisen-Kohlenstoff-Legierung I:

| | |
|---|---|
| Kohlenstoff: | 3,3 - 3,5 Gew. %, |
| Silizium: | 1,2 - 1,6 Gew. %, |
| Mangan: | 2,1 - 2,7 Gew. %, |
| Chrom: | 15,2 - 16,2 Gew. %, |
| Wolfram: | 0,7 - 1,3 Gew. %, |
| Molybdän: | 2,0 - 5,0 Gew. %, |
| Kobalt: | 2,2 - 2,8 Gew. %, |
| Titan: | 0,05 - 0,5 Gew. %, |
| Vanadium: | 8,7 - 10,0 Gew. %, |
| Zirkon: | 0 - 0,1 Gew. %, |
| Niob oder/und Tantal: | 2,7 - 3,3 Gew. %, |
| Kupfer: | 0 - 0,2 Gew. %, |
| Nickel: | 1,1 - 1,8 Gew. %, |
| Phosphor: | 1,4 - 1,60 Gew. %, |
| Schwefel: | 0,36 - 0,41 % Gew. %, |
| Stickstoff: | 0,11 - 0,3 Gew. % |
| sowie | |
| Eisen und Verunreinigungen | restlicher Anteil. |

Die Eisen-Kohlenstoff-Legierungen H und I erweisen sich wegen des vergleichsweise großen Anteils an Karbiden, insbesondere Vanadiumkarbid, als besonders verschleißbeständig. Aufgrund des größeren Phosphorgehalts weist die Legierung H gegenüber der Legierung I einen geringeren Reibfaktor auf.

### Eisen-Kohlenstoff-Legierung J:

| | |
|---|---|
| Kohlenstoff: | 2,7 - 2,9 Gew. %, |
| Silizium: | 1,2 - 1,6 Gew. %, |
| Mangan: | 11,0 - 12,0 Gew. %, |
| Chrom: | 15,2 - 16,2 Gew. %, |
| Wolfram: | 0,7 - 1,3 Gew. %, |
| Molybdän: | 2,0 - 5,0 Gew. %, |
| Kobalt: | 2,2 - 2,8 Gew. %, |
| Titan: | 0,05 - 0,5 Gew. %, |
| Vanadium: | 8,7 - 10,0 Gew. %, |
| Zirkon: | 0-0,1 Gew. %, |
| Niob oder/und Tantal: | 1,5 - 2,0 Gew. %, |
| Kupfer: | 0 - 0,2 Gew. %, |
| Nickel: | 1,0 - 1,8 Gew. %, |
| Phosphor: | 0,01 - 1,5 Gew. %, |
| Stickstoff: | 0,11 - 0,3 Gew. %, |
| Schwefel: | 0,41 - 0,5 % Gew. %, |
| sowie | |
| Eisen und Verunreinigungen | restlicher Anteil. |

Die Zusammensetzung der Eisen-Kohlenstoff-Legierung J weist mit 11 bis 12 Gew. % einen vergleichsweise großen Anteil an Mangan auf, um wie oben erläutert die Zerspanbarkeit zu verbessern und darüber hinaus eine verformungsinduzierte Martensitbildung zu unterstützen.

### Eisen-Kohlenstoff-Legierung K (nicht beansprucht):

| | |
|---|---|
| Kohlenstoff: | 2,7 - 2,9 Gew. %, |
| Silizium: | 1,2 - 1,6 Gew. %, |
| Mangan: | 2,1 - 3,0 Gew. %, |
| Chrom: | 16,0 - 17,0 Gew. %, |
| Wolfram: | 10,5 - 11,5 Gew. %, |
| Molybdän: | 2,0 - 5,0 Gew. %, |
| Kobalt: | 2,2 - 2,8 Gew. %, |
| Titan: | 0,05 - 0,5 Gew. %, |
| Vanadium: | 8,0 - 9,0 Gew. %, |
| Zirkon: | 0-0,1 Gew. %, |
| Niob oder/und Tantal: | 1,5 - 2,0 Gew. %, |
| Kupfer: | 0 - 0,2 Gew. %, |
| Nickel: | 1,0 - 1,8 Gew. %, |
| Phosphor: | 0,01 - 0,1 Gew. %, |
| Schwefel: | 0,01 - 0,06 % Gew. %, |
| Stickstoff: | 0,11 - 0,3 Gew. %, |
| sowie | |
| Eisen und Verunreinigungen | restlicher Anteil. |

In der Zusammensetzung der Eisen-Kohlenstoff-Legierung K ist mit 10,5 bis 11,5 Gew. % ein vergleichsweise großer Anteil an Wolfram vorgesehen, um der Legierung eine besonders große Warmfestigkeit zu verleihen.

### Eisen-Kohlenstoff-Legierung L (nicht beansprucht):

| | |
|---|---|
| Kohlenstoff: | 2,7 - 2,9 Gew. %, |
| Silizium: | 1,2 - 1,6 Gew. %, |
| Mangan: | 2,1 - 3,0 Gew. %, |
| Chrom: | 16,0 - 17,0 Gew. %, |
| Wolfram: | 1,0 - 2,0 Gew. %, |
| Molybdän: | 9,0 - 10,0 Gew. %, |
| Kobalt: | 2,2 - 2,8 Gew. %, |
| Titan: | 0,05 - 0,5 Gew. %, |
| Vanadium: | 5,0 - 8,0 Gew. %, |
| Zirkon: | 0 - 0,1 Gew. %, |
| Niob oder/und Tantal: | 1,5 - 2,0 Gew. %, |
| Kupfer: | 0 - 0,2 Gew. %, |
| Nickel: | 1,0 - 1,8 Gew. %, |
| Phosphor: | 1,0 - 1,6 Gew. %, |
| Schwefel: | 0,01 - 0,06 % Gew. %, |
| Stickstoff: | 0,11 - 0,3 Gew. %, |
| sowie | |
| Eisen und Verunreinigungen | restlicher Anteil. |

Bei der Zusammensetzung der Eisen-Kohlenstoff-Legierung L ist mit 9,0 bis 10,0 Gew. % ein vergleichsweise großer Anteil an Molybdän vorgesehen, um die Legierung mit einer besonders große Einhärtetiefe zu versehen. Der relativ große Phosphorgehalt verleiht der Legierung einen verhältnismäßig geringen Reibwert.

In einer weiteren Ausgestaltung der Erfindung wird das durch das oben beschriebene Verfahren hergestellte Pulver zur Weiterverarbeitung zu einem Werkstück in eine gut schweißbare Kapsel, die vorzugsweise aus Baustahl gebildet ist, gefüllt, evakuiert und gasdicht verschlossen. Anschließend wird die Kapsel zur Verdichtung des Pulvers zu einem Rohkörper, vorzugsweise heiß-isostatisch, gepresst. Zweckmäßigerweise erfolgt das Pressen in einer Heiß-Isostatischen-Presse (HIP) bei einem Druck > 1000 bar während mindesten 3-5 Stunden und bei einer Temperatur von ca. 1100 °C unter Sinterung der Pulverpartikel und Bildung eines dichten und homogenen Gefüges, wobei der Rohkörper vorzugsweise derart gebildet wird, dass er keine Porosität aufweist. Der für die Kapsel benutzte Baustahl ist zweckmäßigerweise ein unlegierter Baustahl, insbesondere gemäß EN 10025-2, wobei der Baustahl vorzugsweise maximal 0,17 Gew. % Kohlenstoff, maximal 0,035 Gew. % Schwefel und 0,035 Gew. % Phosphor enthält.

Es versteht sich, dass der Rohkörper nach dem Pressen, insbesondere wenn er eine Platten- oder Stangenform aufweist, verhältnismäßig kostengünstig durch Schmieden oder Walzen umgeformt werden könnte. Ein besonderer Vorteil des Heiß-Isostatischen-Pressens ist aber, dass sich in der beschriebenen Weise Rohkörper mit verhältnismäßig komplizierten Formen endformnah (near net shape) fertigen lassen. Darüber hinaus können auch Verbundwerkstoffe hergestellt werden, wobei ein zusätzlicher, vorzugsweise fester, Körper gemeinsam unter Verbindung der Pulverpartikel mit dem Körper mit dem Pulver gesintert wird.

In einer weiteren Ausgestaltung der Erfindung wird der Rohkörper mittels eines zerspanenden Fertigungsverfahren, vorzugsweise mittels Drehen, Fräsen oder/und Schleifen, zu einem Werkstück weiterverarbeitet.
In einem weiteren Arbeitsschritt kann das Werkstück einer Wärmebehandlung unterzogen, um das Grundgefüge zu Härten, insbesondere um Härten > 60 HRC zu erreichen. In einer Ausführungsform der Erfindung wird das Werkstück im Austenitbereich, d.h. bei einer Temperatur von 900 bis 1050 °C, während mindestens 24 h geglüht, um eine Ausscheidung von Kohlenstoff zu erzeugen und damit die mechanische Bearbeitbarkeit, insbesondere die Zerspanbarkeit, und die Schmierfähigkeit zu verbessern.
Gegebenenfalls kann je nach einzuhaltender Maßtoleranz danach eine weitere mechanische Bearbeitung durchgeführt werden.

Die Erfindung wird nachfolgend anhand eines Ausführungsbeispiels und der beiliegenden, sich auf das Ausführungsbeispiel beziehenden Zeichnungen näher erläutert. Es zeigen:

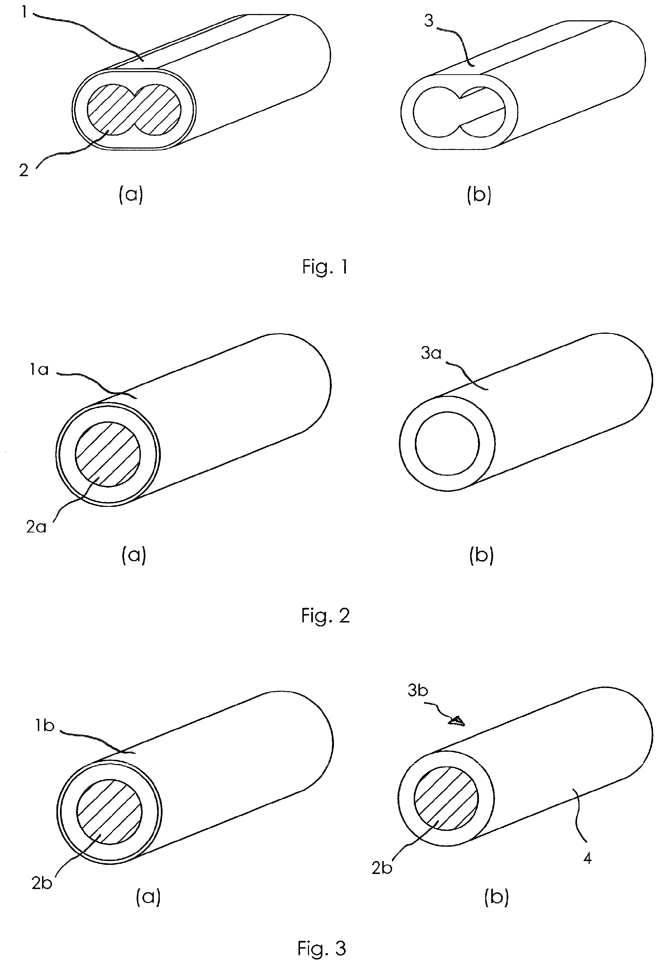

Fig. 1 bis 3 Einrichtungen zur Durchführung des erfindungsgemäßen Verfahrens.

Zur Herstellung eines Extruderzylinders 3 aus einer erfindungsgemäßen Legierung sind aus Baustahl eine hohlzylinderförmige Kapsel 1, die im Querschnitt betrachtet eine ovale Form aufweist, und ein fester, zylinderförmiger Kern 2, dessen Mantelfläche etwa die Mantelflächenform zweier an ihren Mantelflächen miteinander verwachsenen Kreiszylindern aufweist, hergestellt und der Kern 2 wie in Fig. 1a gezeigt in der Kapsel 1 zentriert angeordnet worden. In dieser Position ist die Kapsel 1 an ihren Enden mit hier nicht gezeigten Deckeln gasdicht verschlossen worden. Durch ein ebenfalls nicht gezeigtes Füllrohr ist der Hohlraum im Inneren der Kapsel 2 mit einem erfindungsgemäßen Pulver aus einer Legierung mit nachfolgender Zusammensetzung gefüllt und anschließend evakuiert worden:
Kohlenstoff: 2,8 Gew. %; Silizium: 0,7 Gew. %; Mangan: 2,5 Gew. %; Chrom: 15,8 Gew. %; Wolfram: 0,7 Gew. %; Molybdän: 3,5 Gew. %; Kobalt: 2.5 Gew. %; Titan 0,25 Gew. %; Vanadium: 9,5 Gew. %; Zirkon: 0,08 Gew. %; Niob: 3,0 Gew. %; Kupfer: 0,1 Gew. %; Nickel: 1,5 Gew. %; Phosphor: 0,035 Gew. %; Schwefel: 0,41 % Gew. %; Stickstoff: 0,21 Gew. %; Rest Eisen (mindestens 56 Gew. %) und herstellungsbedingte Verunreinigungen.
Der obengenannte Sättigungsgrad S_{c} beträgt 0,69.

Das Füllrohr ist nach der Evakuierung zusammengedrückt, an seiner dem Deckel zugewandten Stirnseite verschweisst und abgeschnitten worden. Anschließend ist die Kapsel 1 in einer Heiß-Isostatischen-Presse (HIP) bei 1150 °C während 3 Stunden bei 1050 bar unter Argon gepresst worden, wobei das Pulver zu einem Rohkörper gesintert worden ist. Nach der Behandlung mit der Heiß-Isostatischen-Presse sind die Kapsel 1, die Deckel von dem Rohkörper abgezogen sowie der Kern 2 aus dem Rohkörper entnommen worden.
Um eine mechanische Nachbearbeitung des Rohkörpers zu erleichtern, ist er bei 900 °C während 240 Minuten weichgeglüht worden. Er ließ sich aufgrund des hohen Schwefel- und Mangangehalts trotz des hohen Karbidgehalts so gut spanabhebend bearbeiten, dass eine Bearbeitung durch Erodieren nicht notwendig geworden ist. Bei der sich an die mechanische Bearbeitung anschließenden Wärmebehandlung bei 1120 °C während 45 Minuten wurde nach dem Anlassen eine Härte von 62 HRC erreicht.
Der auf diese Weise erzeugte Extruderzylinders 3 ist in Fig. 1b dargestellt.

Zur Herstellung eines Rohrs 3a aus einer erfindungsgemäßen Legierung sind aus Baustahl eine rohrförmige Kapsel 1a und ein fester, kreiszylinderförmiger Kern 2a hergestellt worden. Anschließend ist der Kern 2a in der Kapsel 1a wie in Fig. 2a gezeigt zentriert angeordnet worden. In dieser Position ist die Kapsel 1a an ihren Enden mit hier nicht gezeigten Deckeln gasdicht verschlossen worden und wie oben für das Ausführungsbeispiel nach Fig. 1 beschrieben durch ein Füllrohr mit einem Pulver folgender Zusammensetzung gefüllt worden:
Kohlenstoff: 3,4 Gew. %; Silizium: 1,3 Gew. %; Mangan: 2,5 Gew. %; Chrom: 15,8 Gew. %; Wolfram: 0,7 Gew. %; Molybdän: 3,7 Gew. %; Kobalt: 2,45 Gew. %; Titan 0,3 Gew. %; Vanadium: 9,2 Gew. %; Zirkon: 0,06 Gew. %; Tantal: 3,2 Gew. %; Kupfer: 0,2 Gew. %; Nickel: 1,75 Gew. %; Phosphor: 1,5 Gew. %; Schwefel: 0,39 % Gew. %; Stickstoff: 0,22 Gew. %; Rest Eisen (mindestens 53 Gew. %) und herstellungsbedingte Verunreinigungen.
Der obengenannte Sättigungsgrad S_{c} beträgt 1,01.

Anschließend ist die Kapsel 1a in einer Heiß-Isostatischen-Presse (HIP) bei 1060°C während 5 Stunden bei 1100 bar unter Argon gepresst worden, wobei das Pulver zu einem Rohkörper gesintert worden ist. Nach der Behandlung mit der Heiß-Isostatischen-Presse sind die Kapsel 1a, die Deckel von dem Rohr abgezogen sowie der Kern 2a aus dem Rohkörper entnommen worden.
Der Rohkörper ist anschließend bei 920 °C während 180 Minuten weichgeglüht worden. Er ließ sich aufgrund des hohen Schwefel- und Mangangehalts trotz des hohen Karbidgehalts so gut spanabhebend bearbeiten, dass eine Bearbeitung durch Erodieren nicht notwendig geworden ist. Bei der sich an die mechanische Bearbeitung anschließenden Wärmebehandlung bei 1140 °C während 30 Minuten ist nach dem Anlassen eine Härte von 61 HRC erreicht worden. In einem anschließenden Reibversuch konnten die durch den hohen Phosphorgehalt erwarteten geringen Reibwerte < 0.6 erreicht werden.
Der auf diese Weise erzeugte Rohr 3a ist in Fig. 2b dargestellt.

Fig. 3 zeigt eine Anordnung zur Herstellung eines Verbundkörpers 3b, der einen Stahlkern 2b und eine Ummantelung 4 des Stahlkerns 2b aus einer erfindungsgemäßen Legierung aufweist. Dazu ist der Stahlkern 2b zentriert in einer rohrförmigen Kapsel 1b angeordnet worden. In dieser Position ist die Kapsel 1b an ihren Enden mit hier nicht gezeigten Deckeln gasdicht verschlossen worden und wie oben für das Ausführungsbeispiel nach Fig. 1 beschrieben durch ein Füllrohr mit einem erfindungsgemäßen Pulver aus einer Legierung folgender Zusammensetzung gefüllt worden:
Kohlenstoff = 2,65 Gew. %; Silizium = 0,6 Gew. %; Mangan = 2,4 Gew. %; Chrom = 10,1 Gew. %; Wolfram = 3,6 Gew. %; Molybdän = 5,8 Gew. %; Kobalt: 6,6 Gew. %; Titan 0.07 Gew. %; Vanadium: 8,6 Gew. %; Zirkon: 0,06 Gew. %; Niob: 1,9 Gew. %; Kupfer: 0,16 Gew. %; Nickel: 1,2 Gew. %; Phosphor: 0,02 Gew. %; Schwefel: 0,19 % Gew. %; Stickstoff: 0,2 Gew. %; Rest Eisen (mindestens 55,3 Gew.%) und herstellungsbedingte Verunreinigungen.
Der obengenannte Sättigungsgrad S_{c} beträgt 0,65.

Anschließend ist die Kapsel 1b in einer Heiß-Isostatischen-Presse (HIP) bei 1100 °C während 4 Stunden bei 1050 bar unter Argon gepresst worden, wobei das Pulver unter Bildung eines Verbundrohkörpers auf den Stahlkern 2b aufgesintert worden ist. Nach der Behandlung mit der Heiß-Isostatischen-Presse sind die Kapsel 1b und die Deckel von dem Verbundrohkörper abgezogen worden. Der Verbundrohkörper ist anschließend bei 890 °C während 200 Minuten weichgeglüht worden. Er ließ sich danach spanabhebend bearbeiten, ohne dass ein Erodieren notwendig geworden ist. Bei einer anschließenden Wärmebehandlung bei 1080 °C während 40 Minuten wurde nach dem Anlassen eine Härte von 61 HRC erreicht. Bei einem anschließenden Reibversuch wurden die erwarteten tiefen Reibwerte < 0.5 erreicht. Der auf diese Weise erzeugte Verbundkörper 3b ist in Fig. 3b dargestellt.

Die Pulver, die zur Durchführung der vorgenannten Verfahren benutzt worden sind, sind schmelzmetallurgisch hergestellt worden, wobei ein Gießstrahl eines Durchmessers von 1,5 mm mit einem Gasdruck von > 1 bar Überdruck mittels einer Düse in einer Stickstoffatmosphäre versprüht worden. Die dadurch erzeugten Tropfen wiesen eine Größe von 0,01 bis 1,5 mm und eine kugelige Form auf. Die Pulverpartikel sind nach der Verdüsung in einem rotierenden Gefäß aufgefangen und bis zur vollständigen Abkühlung in Bewegung gehalten worden. Das verdüste Pulver ist anschließend derart gesiebt worden, dass es in einer Korngröße von 0,02 bis 0,5 mm vorliegt.

## Patentansprüche

1. Eisen-Kohlenstoff-Legierung,
die Eisen,
2,1 - 3,9 Gew. % Kohlenstoff,
2,1 - 12 Gew. % Mangan,
0,01 - 1,8 Gew. % Phosphor,
9-30 Gew. % Chrom,
0 - 0,1 Gew. % Zirkon,
0 - 1,8 Gew. % Kupfer und
herstellungsbedingte Verunreinigungen enthält,
wobei die Eisen-Kohlenstoff-Legierung zumindest eines der nachstehend genannten Elemente in nachfolgend jeweilig genannter Zusammensetzung enthält:
| | |
|---|---|
| Vanadium: | 5 - 12 Gew. % |
| Molybdän: | 2-10 Gew. % |
| Kobalt: | 0,5 - 6 Gew. % |
| Wolfram: | 0,7 - 15 Gew. % |
| Silizium: | 0,4 - 2,0 Gew. %, |
| Titan: | 0,05 - 5,0 Gew. %, |
| Niob oder/und Tantal: | 1,5 - 15,0 Gew. %, |
| Nickel: | 1,0 - 8,0 Gew. %, |
| Stickstoff: | 0,11 - 0,3 Gew. %, |
wobei die Eisen-Kohlenstoff-Legierung Schwefel mit einem Anteil von 0,3 - 1,0 Gew. % enthält,
wobei das Eisen und die in der genannten Zusammensetzung vorliegenden herstellungsbedingten Verunreinigungen den Rest der in der Zusammensetzung verbleibenden Anteile bilden.

2. Eisen-Kohlenstoff-Legierung nach Anspruch 1,
**dadurch gekennzeichnet,**
**dass** die Legierung mindestens 0,7 Gew. %, Schwefel enthält.

3. Eisen-Kohlenstoff-Legierung nach Anspruch 1 oder 2,
**dadurch gekennzeichnet,**
**dass** die Legierung mindestens 0,03 Gew. %, vorzugsweise mindestens 0,05 Gew. %, Phosphor enthält.

4. Eisen-Kohlenstoff-Legierung nach einem der Ansprüche 1 bis 3,
**dadurch gekennzeichnet,**
**dass** der Masseanteil von Mangan in der Legierung zumindest 4,5 mal so groß ist wie der Masseanteil von Schwefel.

5. Eisen-Kohlenstoff-Legierung nach einem der Ansprüche 1 bis 4,
**dadurch gekennzeichnet,**
**dass** die Legierung 8 - 12 Gew. %, Vanadium enthält.

6. Eisen-Kohlenstoff- nach einem der Ansprüche 1 bis 5,
**dadurch gekennzeichnet,**
**dass** die Eisen-Kohlenstoff-Legierung Zirkon in einem Anteil von 0,01 - 0,1 Gew. % und/oder Kupfer in einem Anteil von 0,01 - 0,1 Gew. % enthält.

7. Eisen-Kohlenstoff-Legierung nach einem der Ansprüche 1 bis 6,
**dadurch gekennzeichnet,**
**dass** die Legierung höchstens 2,7 Gew. % Mangan enthält.

8. Verfahren zur Herstellung eines Werkstücks aus einer Eisen-Kohlenstoff-Legierung mit einer Zusammensetzung nach einem der Ansprüche 1 bis 7,
**dadurch gekennzeichnet,**
**dass** die Eisen-Kohlenstoff-Legierung schmelzmetallurgisch erzeugt wird und zur Bildung von Pulverpartikeln in geschmolzenem Zustand mittels einer Düse versprüht wird.

9. Verfahren nach Anspruch 8,
**dadurch gekennzeichnet,**
**dass** das Pulver in einem gasdicht verschließbaren Behälter, der vorzugsweise aus Baustahl gebildet ist, angeordnet wird und mittels Heiß-Isostatischem-Pressen (HIP) zu dem Werkstück verdichtet wird, wobei das Werkstück nach dem Heiß-Isostatischem-Pressen vorzugsweise mittels eines spanenden Fertigungsverfahrens, insbesondere Fräsen, Drehen und/oder Schleifen, bearbeitet wird.

10. Verwendung einer Eisen-Kohlenstoff-Legierung mit einer Zusammensetzung nach einem der Ansprüche 1 bis 7 zur Herstellung von Bauteilen von Kunststoffverarbeitungsmaschinen, insbesondere Extrudern, oder von Formen für die Kunststoffverarbeitung, vorzugsweise für Spritzguss- oder Druckgussformen.

## Claims

1. Iron-carbon alloy containing
iron,
2.1 - 3.9% by weight of carbon,
2.1 - 12% by weight of manganese,
0.01 - 1.8% by weight of phosphorus,
9 - 30% by weight of chromium,
0 - 0.1% by weight of zirconium,
0 - 1.8% by weight of copper and
production-related impurities,
where the iron-carbon alloy contains at least one of the following elements in a composition as indicated below in each case:
| | |
|---|---|
| vanadium: | 5 - 12% by weight |
| molybdenum: | 2 - 10% by weight |
| cobalt: | 0.5 - 6% by weight |
| tungsten: | 0.7 - 15% by weight |
| silicon: | 0.4 - 2.0% by weight, |
| titanium: | 0.05 - 5.0% by weight, |
| niobium and/or tantalum: | 1.5 - 15.0% by weight, |
| nickel: | 1.0 - 8.0% by weight, |
| nitrogen: | 0.11 - 0.3% by weight, |
where the iron-carbon alloy contains sulfur in a proportion of 0.3 - 1.0% by weight,
where the iron and the production-related impurities present in the composition indicated form the balance of the proportions remaining in the composition.

2. Iron-carbon alloy according to Claim 1,
**characterized in that**
the alloy contains at least 0.7% by weight of sulfur.

3. Iron-carbon alloy according to Claim 1 or 2,
**characterized in that**
the alloy contains at least 0.03% by weight, preferably at least 0.05% by weight, of phosphorus.

4. Iron-carbon alloy according to any of Claims 1 to 3,
**characterized in that**
the proportion by mass of manganese in the alloy is at least 4.5 times the proportion by mass of sulfur.

5. Iron-carbon alloy according to any of Claims 1 to 4,
**characterized in that**
the alloy contains 8 - 12% by weight of vanadium.

6. Iron-carbon alloy according to any of Claims 1 to 5,
**characterized in that**
the iron-carbon alloy contains zirconium in a proportion of 0.01 - 0.1% by weight and/or copper in a proportion of 0.01 - 0.1% by weight.

7. Iron-carbon alloy according to any of Claims 1 to 6,
**characterized in that**
the alloy contains not more than 2.7% by weight of manganese.

8. Process for producing a workpiece composed of an iron-carbon alloy having a composition according to any of Claims 1 to 7,
**characterized in that**
the iron-carbon alloy is produced melt-metallurgically and is sprayed in the molten state by means of a nozzle to form powder particles.

9. Process according to Claim 8,
**characterized in that**
the powder is placed in a vessel which can be closed in a gastight manner and is preferably made of structural steel, and is densified by means of hot isostatic pressing (HIP) to form the workpiece, where the workpiece after the hot isostatic pressing is preferably worked by means of a cutting manufacturing process, in particular milling, turning and/or grinding.

10. Use of an iron-carbon alloy having a composition according to any of Claims 1 to 7 for producing components of polymer processing machines, in particular extruders, or moulds for polymer processing, preferably for injection moulding tools or pressure casting moulds.

## Revendications

1. Alliage fer-carbone, qui contient du fer,
2,1-3,9% en poids de carbone,
2,1-12% en poids de manganèse,
0,01-1,8% en poids de phosphore,
9-30% en poids de chrome,
0-0,1% en poids de zirconium,
0-1,8% en poids de cuivre et
des impuretés dues à la fabrication,
l'alliage fer-carbone contenant au moins l'un des éléments mentionnés ci-dessous avec la composition respective mentionnée ci-dessous :
| | |
|---|---|
| vanadium : | 5-12% en poids, |
| molybdène: | 2-10% en poids, |
| cobalt : | 0,5-6% en poids, |
| tungstène: | 0,7-15% en poids, |
| silicium : | 0,4-2,0% en poids, |
| titane : | 0,05-5,0% en poids, |
| niobium et/ou tantale : | 1,5-15,0% en poids, |
| nickel : | 1,0-8,0% en poids, |
| azote : | 0,11-0,3% en poids, |
l'alliage fer-carbone contenant du soufre en une proportion de 0,3-1,0% en poids, le fer et les impuretés dues à la fabrication se trouvant dans ladite composition formant le reste des proportions restant dans la composition.

2. Alliage fer-carbone selon la revendication 1, **caractérisé en ce que** l'alliage contient au moins 0,7% en poids de soufre.

3. Alliage fer-carbone selon la revendication 1 ou 2, **caractérisé en ce que** l'alliage contient au moins 0,03% en poids, de préférence au moins 0,05% en poids de phosphore.

4. Alliage fer-carbone selon l'une quelconque des revendications 1 à 3, **caractérisé en ce que** la proportion massique de manganèse dans l'alliage est au moins 4,5 fois plus grande que la proportion massique de soufre.

5. Alliage fer-carbone selon l'une quelconque des revendications 1 à 4, **caractérisé en ce que** l'alliage contient 8-12% en poids de vanadium.

6. Alliage fer-carbone selon l'une quelconque des revendications 1 à 5, **caractérisé en ce que** l'alliage fer-carbone contient du zirconium en une proportion de 0,01-0,1% en poids et/ou du cuivre en une proportion de 0,01-0,1% en poids.

7. Alliage fer-carbone selon l'une quelconque des revendications 1 à 6, **caractérisé en ce que** l'alliage contient au plus 2,7% en poids de manganèse.

8. Procédé pour la préparation d'une pièce en un alliage fer-carbone présentant une composition selon l'une quelconque des revendications 1 à 7, **caractérisé en ce que** l'alliage fer-carbone est produit par métallurgie en masse fondue et est pulvérisé à l'état fondu au moyen d'une buse pour la formation des particules de poudre.

9. Procédé selon la revendication 8, **caractérisé en ce que** la poudre est disposée dans un récipient pouvant être fermé de manière étanche aux gaz, qui est de préférence en acier de construction, et est comprimée en ladite pièce au moyen d'un pressage isostatique à chaud, la pièce étant usinée après le pressage isostatique à chaud, de préférence au moyen d'une technologie avec enlèvement de copeaux, en particulier le fraisage, le tournage et/ou le meulage.

10. Utilisation d'un alliage fer-carbone présentant une composition selon l'une quelconque des revendications 1 à 7 pour la fabrication d'éléments de machines de transformation de matériaux synthétiques, en particulier d'extrudeuses, ou de moules pour la transformation de matériaux synthétiques, en particulier pour des moules pour le moulage par injection ou le moulage sous pression.
